# EUROPEAN PATENT APPLICATION

(11) **EP 4 508 977 A1**
(43) Date of publication of application: **19.02.2025**
(21) Application number: 23195583.2
(22) Date of filing: 06.09.2023
(51) Int. Cl.: A01K 1/01

(54) **LITTER BIN AND PET TOILET**

(30) Priority: 18.08.2023 CN 202322237850 U
(71) Applicant: Petpivot Inc, Portland, OR 97209 (US)
(72) Inventor: TANG, Tieqiang, Shaoyang City, Hunan Province, 422100 (CN)
(74) Representative: Lin Chien, Mon-Yin

(57) **Abstract**

The present disclosure discloses a litter bin and a pet toilet. The litter bin includes a bin body, an integral partition plate and a sifter, which are arranged in the bin body. The integral partition plate and an inner wall of the bin body form a receiving slot, and the integral partition plate is integrally molded with the bin body; a second opening is formed in one side, away from a notch of the receiving slot, of the bin body. When the bin body rotates, pet litter and waste are sifted through the sifter; and when the bin body continues to rotate, the waste is rotated to the second opening along the integral partition plate.

## Description

### CROSS-REFERENCE TO RELATED APPLICATIONS

The application claims priority of Chinese patent application CN202322237850.0, filed on August 18, 2023, which is incorporated herein by reference in its entireties.

### TECHNICAL FIELD

The present disclosure relates to the technical field of pet supplies, and in particular, to a litter bin and a pet toilet.

### BACKGROUND

As is well known, litter boxes are mainly used as toilet supplies for pet cats. Litter is arranged in a litter box. After a pet defecates in the litter, a user is required to use a litter scoop to filter waste caked by pet's urine, pet's feces, and the litter and throw it away. This method is cumbersome. To this end, an intelligent litter box has come into being on the market. The intelligent litter box includes a base and a litter bin. The litter bin rotates relative to the base and is provided with a first opening. A sieve and a partition plate are arranged in the litter box. A receiving slot is formed by the partition plate and an inner wall of the litter bin. In this way, when the litter box rotates, after the sieve inside the litter bin filters the litter, the litter falls into the receiving slot. Waste is left above the sieve. When the litter bin continues to rotate until the first opening is downward, the waste may fall into the base through the sieve and the partition plate from the first opening. However, the partition plate inside the existing litter bin is mounted through a screw, which adds a production procedure of the litter bin and affects the production efficiency of the litter bin.

### SUMMARY

The present disclosure mainly aims to provide a litter bin and a pet toilet, so as to solve the problem of low production efficiency caused by complexity of an existing litter bin production procedure.

In order to solve the above technical problem, the technical solution of the present disclosure is as follows:

A litter bin includes a bin body, an integral partition plate and a sifter, which are arranged in the bin body. The integral partition plate and an inner wall of the bin body form a receiving slot, and the integral partition plate is integrally molded with the bin body; a second opening is formed in one side, away from a notch of the receiving slot, of the bin body; when the bin body rotates, pet litter and waste are sifted through the sifter; and when the bin body continues to rotate, the waste is rotated to the second opening along the integral partition plate.

In one embodiment, the bin body includes a first housing and a second housing connected to the first housing; the integral partition plate includes a first partition plate integrally molded with the first housing, and a second partition plate integrally molded with the second housing; and the first partition plate and the second partition plate form the integral partition plate when the first housing is connected to the second housing.

In one embodiment, a first joint structure is arranged between the first partition plate and the second partition plate.

In one embodiment, the first joint structure includes a first embedding block and a first embedding slot used in conjunction with the first embedding block; and the first embedding block is arranged in the first embedding slot when the first housing is connected to the second housing.

In one embodiment, the first embedding block is formed by protruding from one side, opposite to the second partition plate, of the first partition plate; and the first embedding slot is located on the second partition plate.

In one embodiment, second guide surfaces are formed on two sides of the first embedding block and two side walls of a notch of the first embedding slot.

In one embodiment, an inner side wall, close to the receiving slot, of the first partition plate protrudes to form a first reinforcing rib, and an inner side wall, close to the receiving slot, of the second partition plate protrudes to form a second reinforcing rib.

In one embodiment, both the first reinforcing rib and the second reinforcing rib are arranged in a lengthwise direction of the second opening; one end of the first reinforcing rib is connected to a side wall of the bin body, and the other end protrudes out of the first partition plate and is arranged in the second housing when the first housing is connected to the second housing; the second reinforcing rib and the first reinforcing rib are misaligned; and one end of the second reinforcing rib is connected to the side wall of the bin body, and the other end protrudes out of the second partition plate and is arranged in the second housing when the first housing is connected to the second housing.

In one embodiment, the integral partition plate includes a cambered surface section located next to the sifter, and a guide section; a side surface, away from the receiving slot, of the cambered surface section is a cambered surface protruding relative to the side wall of the bin body; and the guide section extends from the cambered surface section to the second opening of the bin body to guide the waste to the second opening when the bin body rotates.

In one embodiment, two end surfaces of the sifter protrude outwards to form first insertion blocks; first insertion slots are formed in positions, corresponding to the first insertion blocks, on an inner side wall of the bin body; the first insertion blocks are arranged in the first insertion slots; the inner side wall of the bin body protrudes on one side of the notch of the receiving slot to form a first limiting block; and the sifter is located between the first limiting block and the integral partition plate.

In one embodiment, a second limiting block is formed on a side wall, away from the first limiting block, of the sifter, and the second limiting block is located on one side, away from the receiving slot, of the integral partition plate.

In one embodiment, a second joint structure is arranged between the first housing and the second housing.

In one embodiment, the second joint structure includes a second embedding block and a second embedding slot used in conjunction with the second embedding block; and the second embedding block is arranged in the second embedding slot when the first housing is connected to the second housing.

In one embodiment, the second embedding block is formed by protruding out of one side, opposite to the second housing, of the first housing, and the second embedding slot is located on the second housing.

In one embodiment, one side, close to the second housing, of the first housing protrudes to form a plurality of first connecting lug seats; one side, close to the first housing, of the second housing protrudes to form a plurality of second connecting lug seats; the first connecting lug seats are connected to the second connecting lug seats through screws; the second connecting lug seats are located on outer sides of the first connecting lug seats and are provided with counter bores in positions corresponding to the screws; and plugs are arranged in the counter bores.

In one embodiment, a removable basin body provided with a third opening in a top is arranged in the bin body; the inner wall of the bin body protrudes out of a circumferential side of the basin body to form a plurality of clamping blocks configured to limit the basin body; and the first limiting block is a clamping block.

In one embodiment,a side wall, close to the third opening, of the basin body inwards protrudes to form a cambered guide surface.

The present disclosure also provides a pet toilet, including a base, a collection basin arranged on the base, and a litter bin as above,
wherein the litter bin is rotatably arranged on the base; a first opening that is in communication with the collection basin is formed in the base; the litter bin rotates relative to the base; and when the second opening is opposite to the first opening, the waste falls into the collection basin through the second opening and the first opening in sequence.

In one embodiment, the collection basin is detachably arranged at a bottom of the base; and the bottom of the base is further provided with a support leg located on the circumferential side of the collection basin.

In one embodiment, two sides of a top of the collection basin outwards extend to form second insertion blocks; sliding chutes used in conjunction with the second insertion blocks are formed in the bottom of the base; and the insertion blocks are arranged in the sliding chutes.

Beneficial effects: compared with the prior art, in this embodiment, the integral partition plate and the bin body are integrally molded, which can effectively simplify an assembly process of the integral partition plate, reduce the production procedures of the litter bin, and improve the production efficiency of the litter bin. In this way, there is no gap between the integral partition plate and the litter bin, which can prevent pet litter maintained in a gap and facilitate cleaning of the litter bin.

### BRIEF DESCRIPTION OF THE DRAWINGS

In order to explain the technical solutions of the embodiments of the present disclosure more clearly, the following will briefly introduce the accompanying drawings used in the embodiments. Apparently, the drawings in the following description are only some embodiments of the present disclosure. Those of ordinary skill in the art can obtain other drawings based on these drawings without creative work.
FIG. 1 is a three-dimensional diagram of the present disclosure;
FIG. 2 is a top view of the present disclosure;
FIG. 3 is a cutaway view of the present disclosure along the direction A-A in FIG. 2;
FIG. 4 is a cutaway view of the present disclosure along the direction B-B in FIG. 2;
FIG. 5 is a schematic diagram of assembling of a base and a baffle plate of the present disclosure;
FIG. 6 is a structural diagram of a baffle plate of the present disclosure;
FIG. 7 is a structural diagram of a base of the present disclosure;
FIG. 8 is an exploded diagram of a base of the present disclosure;
FIG. 9 is a partially exploded diagram of a base of the present disclosure;
FIG. 10 is a three-dimensional diagram of a litter bin of the present disclosure;
FIG. 11 is an exploded diagram of a bin body of the present disclosure;
FIG. 12 is an enlarged diagram of the region a in FIG. 11;
FIG. 13 is a structural diagram of a first housing of the present disclosure;
FIG. 14 is an enlarged diagram of the region b in FIG. 13;
FIG. 15 is an enlarged diagram of the region c in FIG. 13;
FIG. 16 is a cutaway view of a litter bin of the present disclosure along a junction line between a first housing and a second housing;
FIG. 17 is a structural diagram of removing a second housing from a litter bin of the present disclosure;
FIG. 18 is a structural diagram of a sifter of the present disclosure; and
FIG. 19 is a structural diagram of a basin body of the present disclosure.

### DETAILED DESCRIPTION OF THE EMBODIMENTS

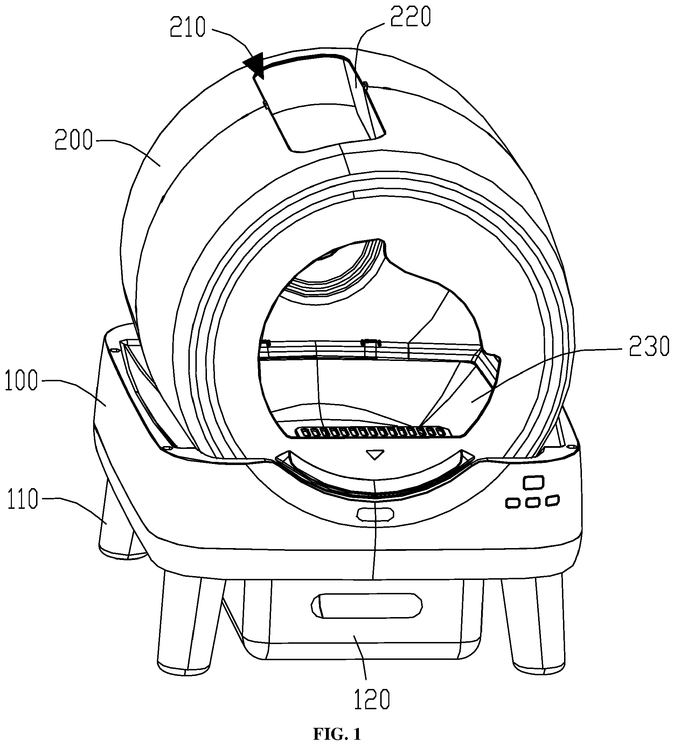

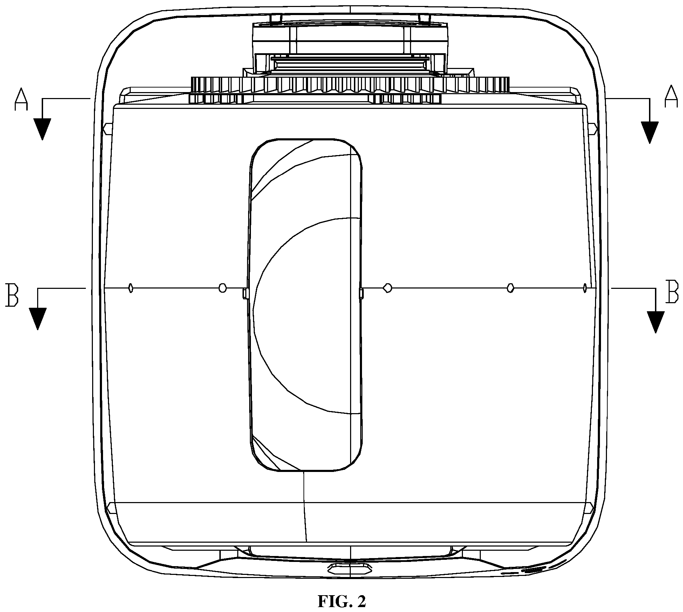

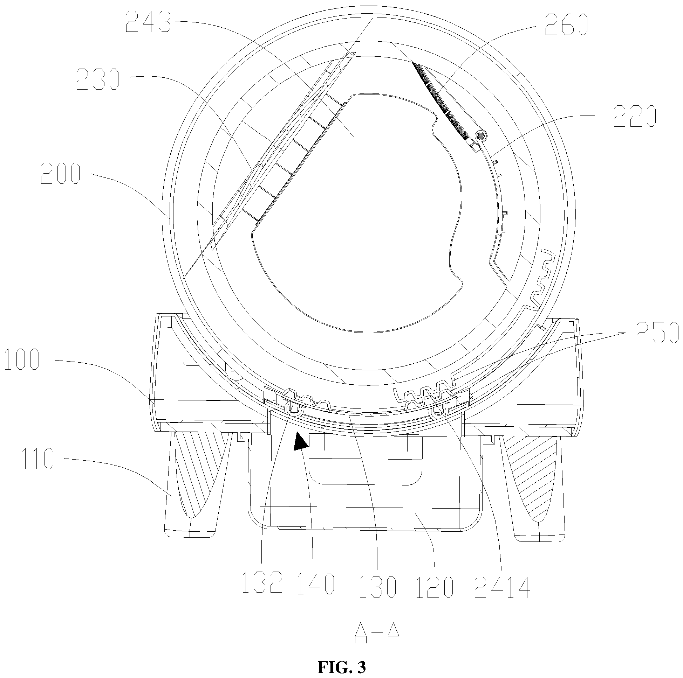

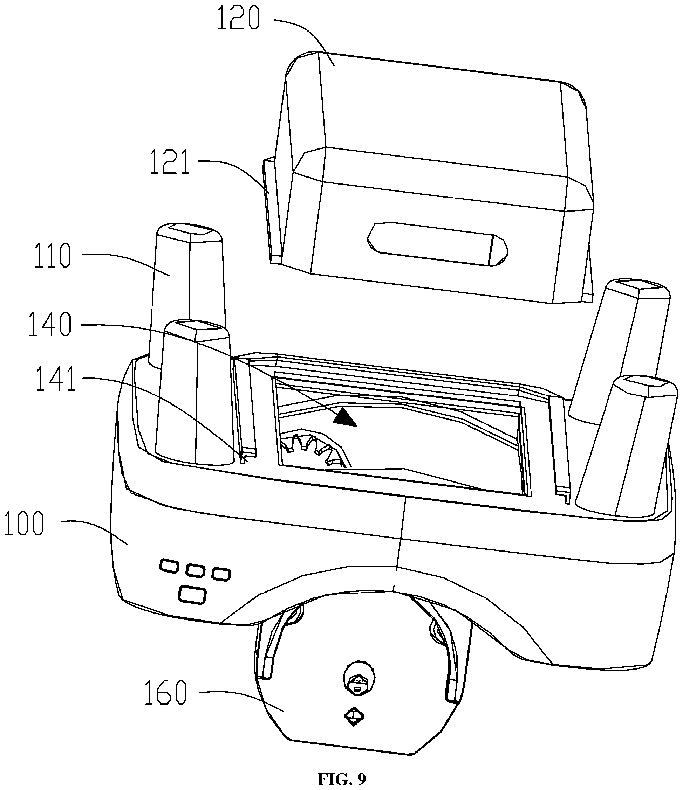

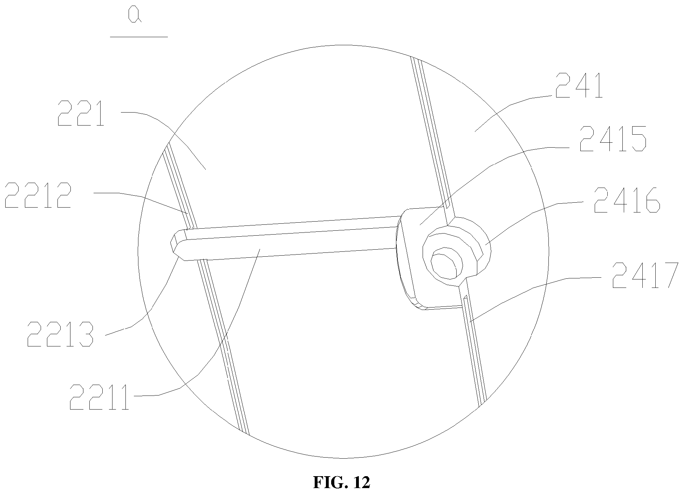

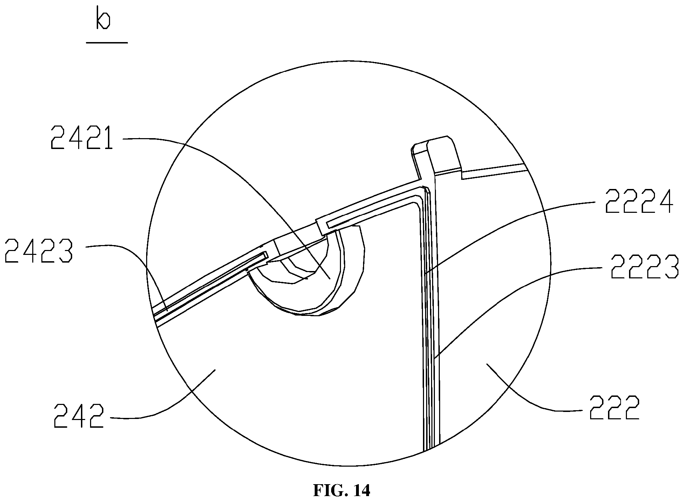

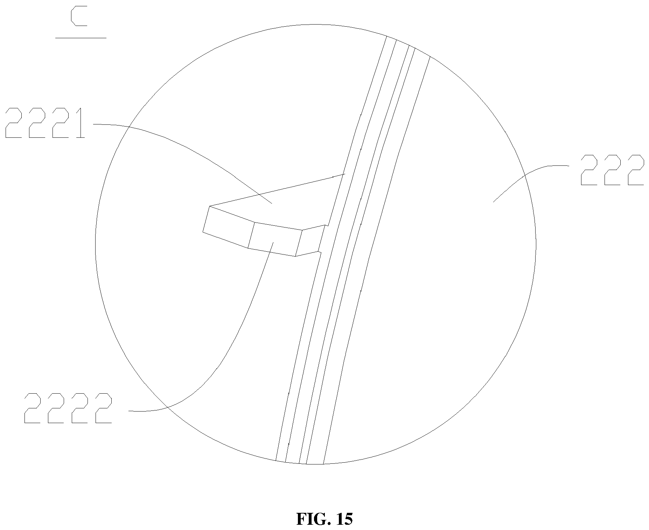

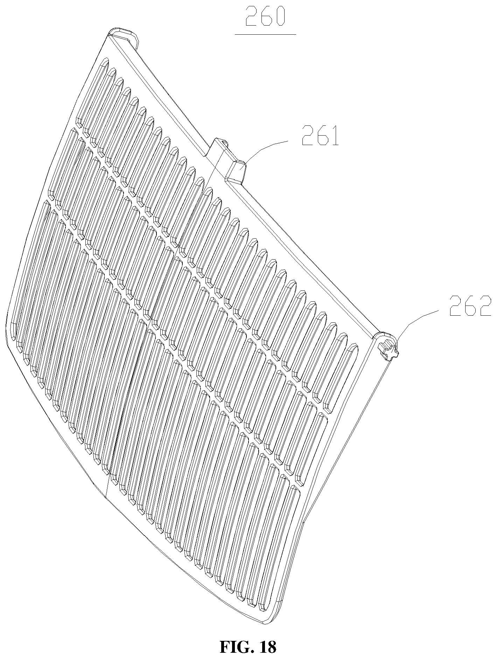

Referring to FIG. 1 to FIG. 19, a pet toilet in the embodiments of the present disclosure is shown.

Referring to FIG. 1 to FIG. 3, the pet toilet includes a base 100, and a litter bin 200 rotatably arranged on the base 100. The base 100 is provided with a collection chamber 121. A first opening 140 is formed in a position, corresponding to the collection chamber 121, of the base 100. A baffle plate 130 is movably arranged at the first opening 140 of the base 100. The litter bin 200 is provided with a first joint portion 2414. The baffle plate 130 is provided with a second joint portion 132 used in conjunction with the first joint portion 2414. The litter bin 200 is provided with a pushing member 250. The baffle plate 130 is configured to be pushed, when the litter bin 200 rotates relative to the base 100, by the pushing member 250 and is lifted upwards relative to the base 100 in the pushing process. The first joint portion 2414 is configured to be embedded with the second joint portion 132 when the baffle plate 130 is lifted upwards.

In this embodiment, the first joint portion 2414 and the second joint portion 132 used in conjunction with the first joint portion 2414 are respectively configured on the litter bin 200 and the baffle plate 130. Furthermore, after the litter bin 200 rotates a certain angle, the pushing member 250 is used to push the baffle plate 130 to move, and the baffle plate 130 is lifted in the moving process, so that the first joint portion 2414 and the second joint portion 132 are embedded to achieve aligned connection between the baffle plate 130 and the litter bin 200 and achieve that the baffle plate 130 rotates together with the litter bin 200. Therefore, the baffle plate 130 is moved away from the first opening 140 to open the first opening 140, so that sifted waste in the litter bin 200 falls into the collection chamber 121 via the first opening 140 to treat the waste of a pet. Furthermore, when the litter bin 200 rotates reversely, the first joint portion 2414 and the second joint portion 132 are embedded, so that the baffle plate 130 can stably rotate to an initial position along with the litter bin 200. Meanwhile, after the baffle plate 130 returns to the initial position, the baffle plate 130 is lowered relative to the base 100, so that the first joint portion 2414 is separated from the second joint portion 132 to prevent the baffle plate 130 from continuing to rotate along with the litter bin 200 after moving to the first opening 140.

For this reason, the first joint portion 2414 and the second joint portion 132 are embedded, which can effectively enlarge a contact area between the litter bin 200 and the baffle plate 130, enlarge a thrust surface of the baffle plate 130, improve the stability of the back and forth movement of the baffle plate 130, and solve the problems that the baffle plate 130 on an existing intelligent litter box is poor in rotation stability and the resetting of the baffle plate under its gravity is easily affected by dust and fragments.

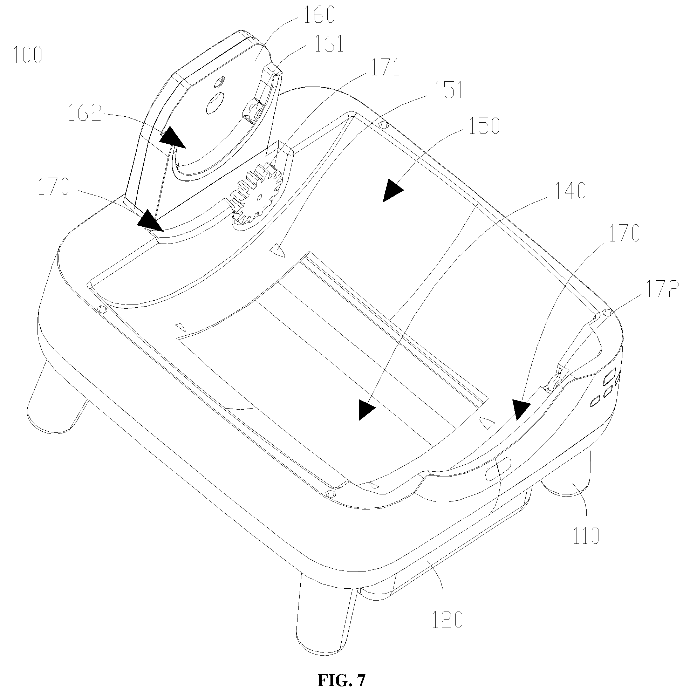

Specifically, in the above embodiments, referring to FIG. 7, a surface of the base 100 is inwards sunken to form a concave groove 151. At least part of the baffle plate 130 is arranged in the concave groove 151 when the baffle plate is at the initial position. For this reason, the baffle plate 130 is separated from the concave groove 151 under the pushing of the pushing member 250, so that the baffle plate 130 can be lifted to achieve that the first joint portion 2414 and the second joint portion 132 are embedded. Furthermore, after the waste of the pet falls into the collection chamber 121, the litter bin 200 reversely rotates to drive the baffle plate 130 to rotate together. The baffle plate 130 moves into the concave groove 151, which can separate the first joint portion 2414 from the second joint portion 132, so as to prevent the baffle plate 130 from continuing to move with the litter bin 200. In other embodiments, a bottom of the baffle plate 130 is rotatably provided with first rollers 131 at two ends of the first opening 140, and at the initial position, at least part of each of the first rollers 131 is arranged in the concave groove 151. This structure can also achieve that the baffle plate 130 is lifted in the moving process and achieve that the first joint portion 2414 and the second joint portion 132 are embedded.

In the above embodiment, a side wall of the concave groove 151 is a first guide surface. Through the guide effect of the first guide surface, when the baffle plate 130 is pushed by the pushing member 250, the first rollers 131 are more smoothly separated from the concave groove 151. Specifically, the first guide surface can be an inclined surface or a cambered surface.

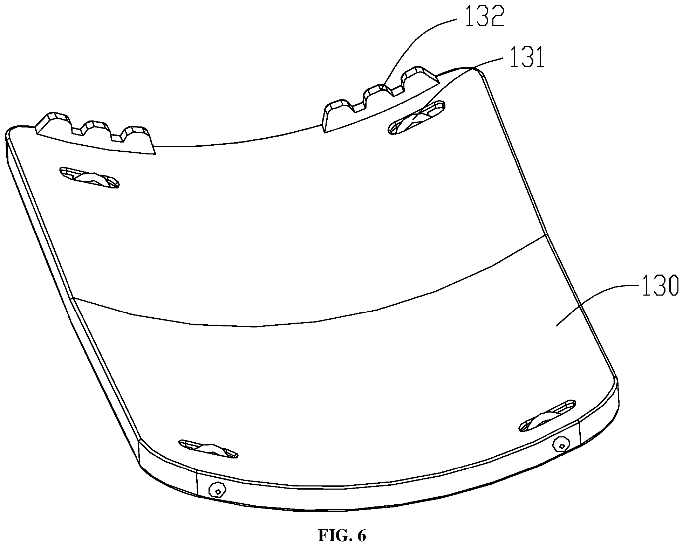

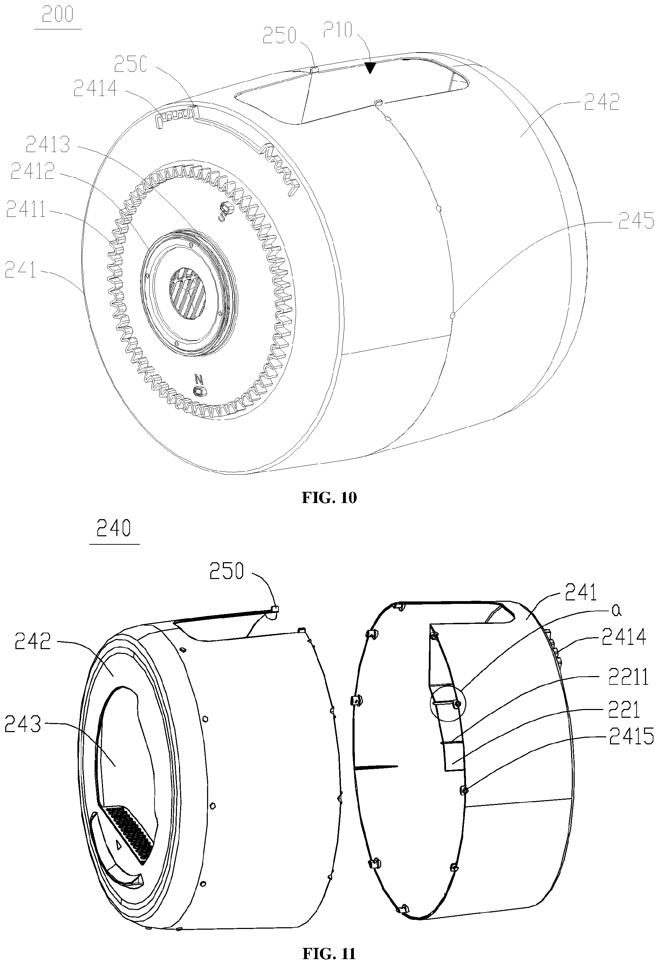

In the above embodiment, referring to FIG. 6 and FIG. 10, the first joint portion 2414 is a first rack, and the second joint portion 132 is a second rack. The first rack is engaged with the second rack, and a plurality of teeth on both the first rack and the second rack are engaged to effectively enlarge the contact area between the baffle plate 130 and the litter bin 200, thereby improving the stability of the movement of the baffle plate 130. In other embodiments, the first joint portion 2414 may be sunken inwards to form several slots, and the second joint portion 132 may be a convex block formed by outward protrusion. Or, the second joint portion 132 is a slot, and the first joint portion 2414 is a convex block. They can also achieve embedding. The structure of the first joint portion 2414 and the structure of the second joint portion 132 are not limited here.

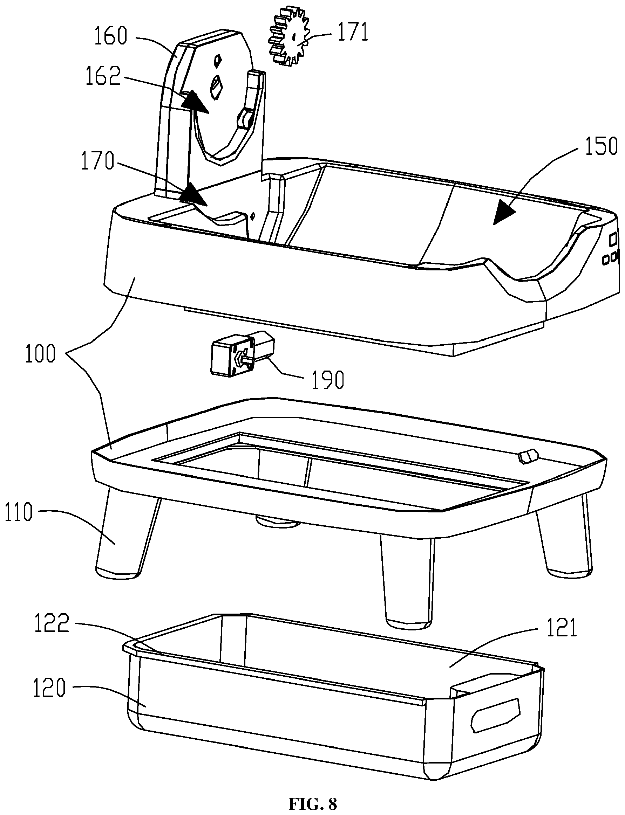

In the above embodiment, referring to FIG. 8, the base 100 is provided with a driving mechanism connected to the litter bin 200 and configured to drive the litter bin 200 to rotate, so as to achieve the rotation of the litter bin 200. Of course, in other embodiments, the litter bin 200 can also be manually rotated.

Referring to FIG. 7 and FIG. 10, the litter bin 200 is in a drum shape, and a rear end surface of the litter bin 200 is provided with a first gear 2411. An upper surface of the base 100 is sunken downwards to form an avoiding groove 150 that is matched with the litter bin 200. It should be understood that a bottom surface of the avoiding groove 150 is a cambered surface. The concave groove 151 is located in the avoiding groove 150, and a radian of the bottom surface of the baffle plate 130 is the same as a radian of the bottom surface of the avoiding groove 150, so that when the litter bin 200 rotates and the first joint portion 2414 is embedded with the second joint portion 132, the baffle plate 130 can be driven to rotate together.

First supporting slots 170 matched with the litter bin 200 are formed in a front side wall and a rear side wall of the avoiding groove 150. The driving mechanism includes a motor 190 and a second gear 171 connected to the motor 190. The second gear 171 is located on the first supporting slot 170 on the rear side wall of the avoiding groove 150, and the second gear 171 is engaged with the first gear 2411. For this reason, the motor 190 can drive the second gear 171 to rotate. The litter bin 200 rotates through the first gear 2411. Furthermore, the first supporting slots 170 at the front and rear ends support the litter bin 200, so that the litter bin 200 can be located above the baffle plate 130 and is spaced apart from the baffle plate 130, to prevent the baffle plate 130 from being directly driven, when the litter bin 200 rotates, to move along the bottom surface of the avoiding groove 150.

The first joint portion 2414 is located on the rear end surface of the litter bin 200. The rear end surface of the litter bin 200 protrudes backwards. The second joint portion 132 is located below the first gear 2411 and behind the rear end surface of the litter bin 200. In this way, when the litter bin 200 rotates, it is possible to prevent the first joint portion 2414 and the second joint portion 132 from affecting the rotation of the litter bin 200. The first joint portion 2414 is located above the second joint portion 132. The pushing member 250 pushes the baffle plate 130 to move, and the baffle plate 130 is lifted after leaving the concave groove 151, so that the first joint portion 2414 is embedded with the second joint portion 132. When the litter bin 200 continues to rotate, the baffle plate 130 is driven to move along the bottom surface of the avoiding groove 150, so as to open the first opening 140.

In an embodiment, referring to FIG. 10, there is one pushing member 250. The pushing member 250 can be formed by protruding outwards from the rear end surface of the litter bin 200 and is located at one end of the first joint portion 2414. A side surface, away from the first gear 2411, of the pushing member 250 is located between an outer side wall of the litter bin 200 and a side surface, away from the first gear 2411, of the first joint portion 2414. When the first joint portion 2414 moves directly above the second joint portion 132, due to the fact that the pushing member 250 is relatively long, the pushing member 250 will continue to rotate with the litter bin 200 and resist against the second joint portion 132, and the baffle plate 130 is pushed to move through the second joint portion 132. Or, a second opening 210 is formed in a side wall of the litter bin 200, and the pushing member 250 is formed by protruding outwards from the side wall of the litter bin 200 and is located next to the second opening 210. During the rotation of the litter bin 200, the pushing member 250 may push the baffle plate 130 to move and open the first opening 140, so that the first opening 140 is opposite to the second opening 210, and it is convenient for the waste to fall into the collection chamber 121 through the first opening 140 from the second opening 210.

In other embodiments, there are a plurality of pushing members 250. At least one pushing member 250 is formed by protruding outwards from the rear end surface of the litter bin 200 and is located at one end of the first joint portion 2414, and a side surface, away from the first gear 2411, of the pushing member 250 is located between the outer side wall of the litter bin 200 and the side surface, away from the first gear 2411, of the first joint portion 2414. At least one pushing member 250 is formed by protruding outwards from the outer side wall of the litter bin 200 and is located next to the second opening 210. In this way, when the litter bin 200 rotates, the pushing member 250 located next to the first joint portion 2414 and the pushing member 250 next to the second opening 210 can push the baffle plate 130 to move together, which enlarges the contact area between the litter bin 200 and the baffle plate 130, enlarges the thrust surface of the baffle plate 130, and increases an acting force of the baffle plate, so as to better push the baffle plate 130. The stability of the movement of the baffle plate 130 can be improved by pushing the baffle plate 130.

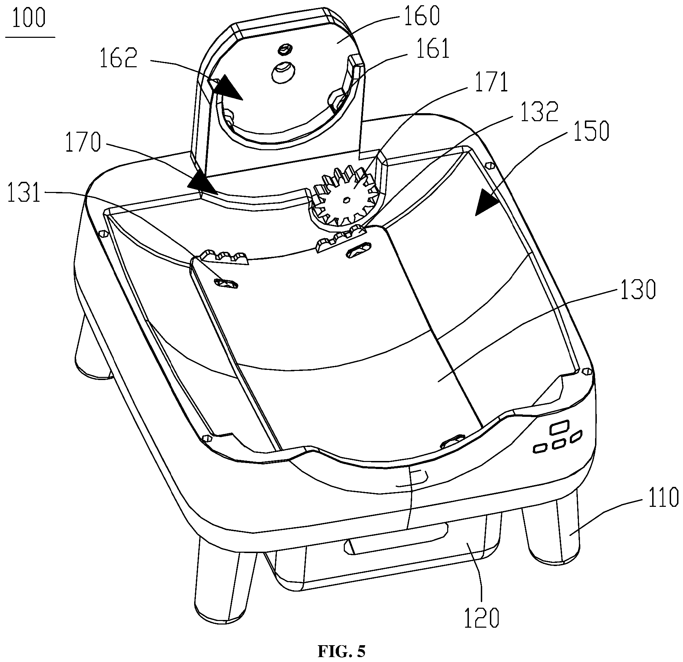

In an embodiment, referring to FIG. 5 to FIG. 8, a bottom surface of the first supporting slot 170 located on the front side wall of the avoiding groove 150 is rotatably provided with a plurality of second rollers 172 spaced apart from each other. By use of the second rollers 172, a friction force during the rotation of the litter bin 200 can be reduced, allowing smoother rotation of the litter bin 200.

In an embodiment, the base 100 is provided with a support plate 160 behind the avoiding groove 150. A second supporting slot 162 is formed in the support plate 160. A bottom surface of the second supporting slot 162 is rotatably provided with a plurality of third rollers 161 spaced apart from each other. A convex column 2412 is arranged on the rear end surface of the litter bin 200. The convex column 2412 is located in the middle of the first gear 2411. An annular groove 2413 is formed in an outer side wall of the convex column 2412. Some of the third rollers 161 are arranged in the annular groove 2413. Due to cooperation between the third rollers 161 and the annular groove 2413, the stability of the rotation of the litter bin 200 can be improved.

In an embodiment, referring to FIG. 10 to FIG. 15, the litter bin 200 includes a bin body 240 and an integral partition plate 220 arranged in the bin body 240. The first joint portion 2414, the first gear 2411, the pushing member 250, and the second opening 210 are all located on the bin body 240. For this reason, the motor 190 can drive the bin body 240 to rotate. The integral partition plate 220 forms a receiving slot 244 with the inner wall of the bin body 240 and is integrally molded with the bin body 240. In this embodiment, the integral partition plate 220 and the bin body 240 are integrally molded, which can effectively simplify an assembly process of the integral partition plate 220, reduce the production procedures of the litter bin 200, and improve the production efficiency of the litter bin 200. In this way, there is no gap between the integral partition plate 220 and the litter bin 200, which can prevent pet litter maintained in a gap and facilitate cleaning of the litter bin 200.

In the above embodiment, to facilitate the production and manufacturing of the bin body 240, the bin body 240 includes a first housing 242 and a second housing 241 connected to the first housing 242. The integral partition plate 220 includes a first partition plate 222 integrally molded with the first housing 242, and a second partition plate 221 integrally molded with the second housing 241. The first partition plate 222 and the second partition plate 221 form the partition plate 220 when the first housing 242 is connected to the second housing 241. Specifically, the first housing 242 is a front half part of the bin body 240, and the second housing 241 is a rear half part of the bin body 240. The second opening 210 is formed by connecting the first housing 242 to the second housing 241. Both the first gear 2411 and the first joint portion 2414 are located on the second housing 241. Furthermore, the first housing 242 is provided with an inlet and outlet 243 for a pet to enter and leave the bin body 240. Of course, in other embodiments, the first housing 242 and the second housing 241 can also be a left half part and a right half part of the bin body 240.

In an embodiment, a first joint structure is arranged between the first partition plate 222 and the second partition plate 221. The first joint structure can improve the stability of the connection between the first partition plate 222 and the second partition plate 221 and narrow a clearance between the first partition plate 222 and the second partition plate 221.

In the above embodiment, the first joint structure includes a first embedding block 2223 and a first embedding slot 2212 used in conjunction with the first embedding block 2223. The first embedding block 2223 is arranged in the first embedding slot 2212 when the first housing 242 is connected to the second housing 241. Thus, a position between the first partition plate 222 and the second partition plate 221 can be limited.

Specifically, the first embedding block 2223 is formed by protruding from one side, opposite to the second partition plate 221, of the first partition plate 222; and the first embedding slot 2212 is located on the second partition plate 221. Or, the first embedding block 2223 is located on the second partition plate 221, and the first embedding slot 2212 is located on the first partition plate 222.

In an embodiment, second guide surfaces 2224 are formed on two sides of the first embedding block 2223 and two side walls of a notch of the first embedding slot 2212. The second guide surfaces 2224 are used for guidance, which can facilitate arrangement of the first embedding block 2223 in the first embedding slot 2212. Specifically, the second guide surfaces 2224 may be inclined surfaces or cambered surfaces.

In an embodiment, an inner side wall, close to the receiving slot 244, of the first partition plate 222 protrudes to form a first reinforcing rib 2221, and an inner side wall, close to the receiving slot 244, of the second partition plate 221 protrudes to form a second reinforcing rib 2211. The strength of the first partition plate 222 and the strength of the second partition plate 221 can be improved through the first reinforcing rib 2221 and the second reinforcing rib 2211.

In an embodiment, both the first reinforcing rib 2221 and the second reinforcing rib 2211 are arranged in a lengthwise direction of the second opening 140. One end of the first reinforcing rib 2221 is connected to an inner wall of the bin body 240, and the other end protrudes out of the first partition plate 222 and is arranged in the second housing 241 when the first housing 242 is connected to the second housing 241. The second reinforcing rib 2211 and the first reinforcing rib 2221 are misaligned. One end of the second reinforcing rib 2211 is connected to the inner wall of the bin body 240, and the other end protrudes out of the second partition plate 221 and is arranged in the second housing 241 when the first housing 242 is connected to the second housing 241. By respectively arranging the protruding ends of the first reinforcing rib 2221 and the second reinforcing rib 2211 on the second partition plate 221 and the first partition plate 222, the strength of the integral partition plate 220 can be improved, and the strength of the connection between the first partition plate 222 and the second partition plate 221 can be conveniently improved.

In an embodiment, a third guide surface 2213 is formed at one end of a side wall, away from the bin body 240, of the first reinforcing rib 2221 and located on one side close to the first partition plate 222. Through the third guide surface 2213, it is convenient to arrange the first reinforcing rib 2221 protruding out of the first partition plate 222 on the second partition plate 221. A fourth guide surface 2222 is formed at one end of a side wall, away from the bin body 240, of the second reinforcing rib 2211 and located on one side close to the second partition plate 221. Through the fourth guide surface 2222, it is convenient to arrange the second reinforcing rib 2211 protruding out of the second partition plate 221 on the first partition plate 222. Specifically, both the third guide surface 2213 and the fourth guide surface 2222 can be inclined surfaces or cambered surfaces.

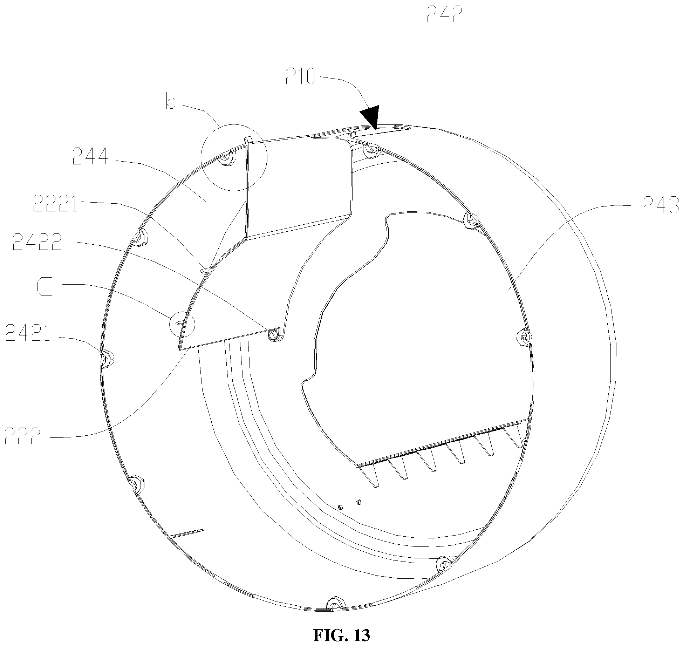

In the above embodiment, referring to FIG. 13 to FIG. 18, a sifter 260 located next to the integral partition plate 220 is arranged in the bin body 240. Therefore, when the litter bin 200 rotates, waste and pet litter can be first sifted through the sifter 260. The pet litter falls into the receiving slot 244 as the litter bin 200 continues to rotate. The waste is discharged along the integral partition plate 220 from the second opening 210 as the litter bin 200 continues to rotate, and the waste falls into the collection chamber 121 via the first opening 140.

Specifically, two end surfaces of the sifter 260 protrude outwards to form first insertion blocks 262. First insertion slots 2422 are formed in two internal end surfaces of the bin body 240. The first insertion blocks 262 are arranged in the first insertion slots 2422, so as to clamp and mount the sifter 260 in the bin body 240. The inner wall of the bin body 240 protrudes on one side of the notch of the receiving slot 244 to form a first limiting block 246. The sifter 260 is located between the first limiting block 246 and the integral partition plate 220. By cooperation between the first insertion blocks 262 and the first limiting block 246, the sifter 260 can be limited, so that the sifter 260 is prevented from rotating relative to the litter bin 200 when the litter bin 200 rotates, which affects the sifting effect on the waste and the pet litter.

In an embodiment, a second limiting block 261 is formed on a side wall, away from the first limiting block 246, of the sifter 260, and the second limiting block 261 is located on one side, away from the receiving slot 244, of the integral partition plate 220. By cooperation between the second limiting block 261 and the first limiting block 246, it is convenient to locate the sifter 260, and it is convenient to arrange the first insertion blocks 262 in the first insertion slots 2422. In other embodiments, the sifter 260 can also be arranged in the bin body 240 through a screws or another buckle form.

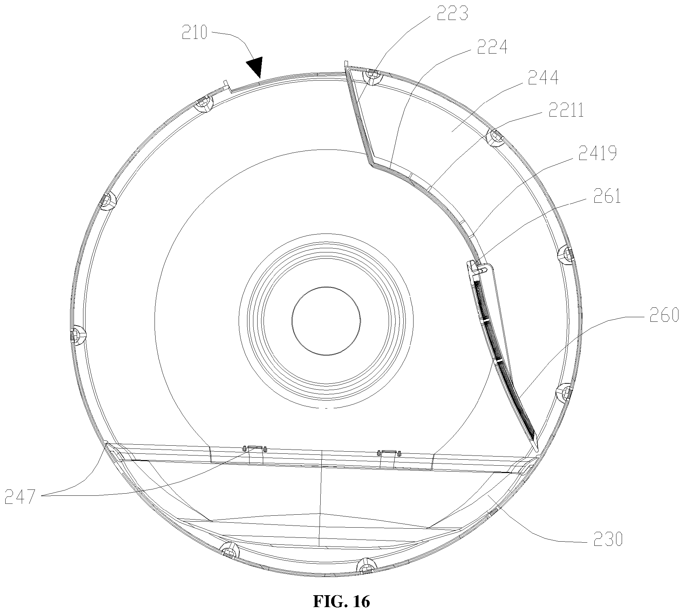

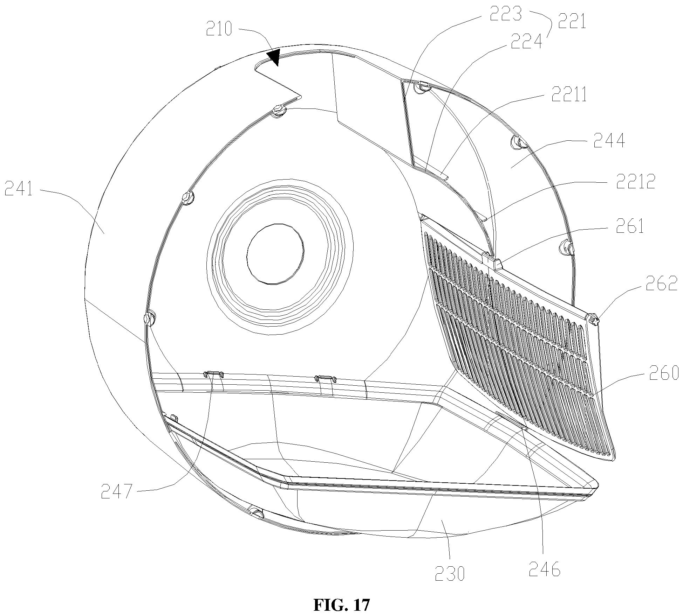

In an embodiment, referring to FIG. 16 and FIG. 17, the integral partition plate 220 includes a cambered surface section 224 located next to the sifter 260, and a guide section 223. It should be understood that the first partition plate 222 and the second partition plate 221 each include the cambered surface section 224 and the guide section 223. A side surface, away from the receiving slot 243, of the cambered surface section 224 is a cambered surface protruding relative to the side wall of the bin body 240. The guide section 223 extends from the cambered surface section to the second opening 210 of the bin body 240. The guide section 223 may be an inclined surface or a cambered surface. In this way, when the bin body 240 rotates, the waste is smoothly guided to the second opening 210 through the cambered surface section 224 and the guide section 223 along a rotating direction and is directly discharged out of the litter bin 200 via the second opening 210, which can effectively prevent the waste from being adhered to the integral partition plate 220, so as to better keep the litter bin 200 clean.

In an embodiment, a second joint structure is arranged between the first housing 242 and the second housing 241, so as to improve the stability of the connection between the first housing 242 and the second housing 241.

Specifically, the second joint structure includes a second embedding block 2423 and a second embedding slot 2417 used in conjunction with the second embedding block 2423. The second embedding block 2423 is arranged in the second embedding slot 2417 when the first housing 242 is connected to the second housing 241, so as to align the first housing 242 with the second housing 241, which facilitates locking screws subsequently. The stability of the connection between the first housing 242 and the second housing 241 can be improved. Specifically, the second embedding block 2423 is formed by protruding out of one side, opposite to the second housing 241, of the first housing 242, and the second embedding slot 2417 is located on the second housing 241. Or, the second embedding block 2423 is located in the second housing 241, and the second embedding slot 2417 is located on the first housing 242.

One side, close to the second housing 241, of the first housing 242 protrudes to form a plurality of first connecting lug seats 2421. One side, close to the first housing 242, of the second housing 241 protrudes to form a plurality of second connecting lug seats 2415. The first connecting lug seats 2421 are connected to the second connecting lug seats 2415 through screws, so as to fixedly connect the first housing 242 to the second housing 241. The second connecting lug seats 2415 are located on outer sides of the first connecting lug seats 2421. The second connecting lug seats 2415 are provided with counter bores 2416 in positions corresponding to the screws. Plugs 245 are arranged in the counter bores 2416. The screws can be hidden by the plugs 245, which improves the appearance of the pet toilet of this embodiment. Specifically, when one end of each screw passes through the corresponding counter bore 2416 and is arranged on the corresponding second connecting lug seat 2415, the screw does not pass through the second connecting lug seat 2415, which can prevent the pet litter from coming into contact with the screw and prevent rust on the screw from affecting the quality of the pet litter.

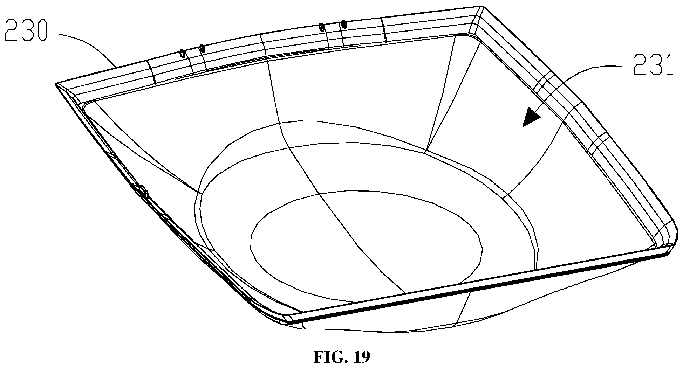

In an embodiment, referring to FIG. 17 and FIG. 19, a removable basin body 230 provided with a third opening 231 in a top is arranged in the bin body 240. A circumferential side, located at the third opening 231, of the basin body 230 abuts against the inner wall of the bin body 240. The inner wall of the bin body 240 protrudes out of the circumferential side of the basin body 230 to form a plurality of clamping blocks 247 configured to limit the basin body 230. The clamping blocks 247 can limit the basin body 230, which prevents the basin body 230 from falling off during the rotation of the litter bin 200 to affect the use of the litter bin 200. Specifically, the first limiting block 246 is a clamping block 247. It should be understood that the first limiting block 246 configured to limit the sifter 260 is also configured to limit the basin body 230.

In an embodiment, a side wall, close to the third opening 231, of the basin body 230 inwards protrudes to form a cambered guide surface, which reduces blockage of the second limiting block 261 between the basin body 230 and the sifter 260 to the waste and the pet litter, so that it is convenient to guide the waste and the pet litter to the sifter 260 for sifting.

In this embodiment, referring to FIG. 1, in an initial state of the pet toilet, the basin body 230 is located at the bottom in the bin body 240; the second opening 210 is located at the top of the bin body 240; the sifter 260 and the integral partition plate 220 are located on a right side in the bin body 240 and are both located between the basin body 230 and the second opening 210. The sifter 260 is located below the integral partition plate 220. The notch of the receiving slot 244 is downward. At least one pushing member 250 is located on a right side of the first opening 140. At least one pushing member 250 is located on a left side of the first rack. The first rollers 131 are arranged in the concave groove 151, and the pet litter and the waste are located in the basin body 230.

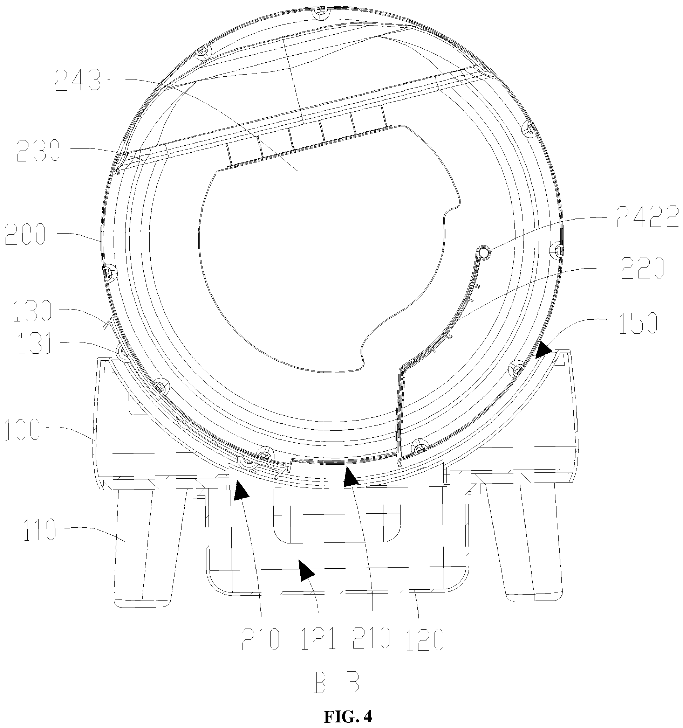

When the motor 190 drives the bin body 240 to rotate, and the pushing member 250 pushes the baffle plate 130 to move to be on a left side of the first opening 140, so as to fully open the first opening 140, the second opening 210 is located at the bottom of the bin body 240 and opposite to the first opening 140. As shown in FIG. 4, the sifter 260 and the integral partition plate 220 are located on a left side in the bin body 240; the sifter 260 is located above the integral partition plate 220; and the notch of the receiving slot 244 is upward. At least one pushing member 250 is located on the right side of the first opening 140. At least one pushing member 250 is located on the left side of the first rack. At least one pushing member 250 is located on the right side of the first rack. The pet litter is located in the receiving slot 244, and the waste falls into the collection chamber 121 through the second opening 210 and the first opening 140.

In an embodiment, referring to FIG. 7 to FIG. 9, a bottom of the base 100 is detachably provided with a collection basin 120, and the collection chamber 121 is located on the collection basin 120. Thus, it is convenient to remove the collection basin 120 and facilitate a user to regularly clean the waste of the pet. Of course, in other embodiments, the collection chamber 121 can also be formed inside the base 100, and is used in cooperation with the first opening 140 to also store the waste of the pet.

Specifically, two sides of a top of the collection basin 120 outwards extend to form second insertion blocks 122. Sliding chutes 141 used in conjunction with the second insertion blocks 122 are formed in the bottom of the base 100. It should be understood that the sliding chutes 141 are located on two sides of the first opening 140. The second insertion blocks 122 are arranged in the sliding chutes 141, so that the collection basin 120 is mounted at the bottom of the base 100. Furthermore, when it is necessary to remove the collection basin 120, the collection basin 120 can be pulled out to facilitate use. In other embodiments, the collection basin 120 can also be removed by using buckles, hasps, or drawers.

In one embodiment, the bottom of the base 100 is further provided with a plurality of support legs 110 located on the circumferential side of the collection basin 120. A bottom surface of the collection basin 120 is located above bottom surfaces of the support legs 110, which can suspend the collection basin 120, reduce friction and scratches between the collection basin 120 and a placement plane of the pet toilet in this embodiment, and facilitate the removal of the collection basin 120.

It should be noted that all directional indications (such as up, down, left, right, front, back...) in the embodiments of the present disclosure are only used to explain a relative positional relationship between components, motion situations, etc. at a certain specific attitude (as shown in the figures). If the specific attitude changes, the directional indication also correspondingly changes.

In addition, the descriptions of "first", "second", etc. in the present disclosure are only used for descriptive purposes, and cannot be understood as indicating or implying its relative importance or implicitly indicating the number of technical features indicated. Therefore, features defined by "first" and "second" can explicitly instruct or impliedly include at least one feature. In addition, "and/or" in the entire text includes three solutions. A and/or B is taken as an example, including technical solution A, technical solution B, and technical solutions that both A and B satisfy. In addition, the technical solutions between the various embodiments can be combined with each other, but it needs be based on what can be achieved by those of ordinary skill in the art. When the combination of the technical solutions is contradictory or cannot be achieved, it should be considered that such a combination of the technical solutions does not exist, and is not within the scope of protection claimed by the present disclosure.

The above descriptions are only preferred embodiments of the present disclosure, and are not intended to limit the patent scope of the present disclosure. Any equivalent structural transformation made by using the content of the specification and the drawings of the present disclosure under the invention idea of the present disclosure, directly or indirectly applied to other related technical fields, shall all be included in the scope of patent protection of the present disclosure.

## Claims

1. A litter bin, comprising a bin body, and an integral partition plate and a sifter which are arranged in the bin body, wherein the integral partition plate and an inner wall of the bin body form a receiving slot, and the integral partition plate is integrally molded with the bin body; a second opening is formed in one side, away from a notch of the receiving slot, of the bin body; when the bin body rotates, pet litter and waste are sifted through the sifter; and when the bin body continues to rotate, the waste is rotated to the second opening along the integral partition plate.

2. The litter bin according to claim 1, wherein the bin body comprises a first housing and a second housing connected to the first housing; the integral partition plate comprises a first partition plate integrally molded with the first housing, and a second partition plate integrally molded with the second housing; and the first partition plate and the second partition plate form the integral partition plate when the first housing is connected to the second housing.

3. The litter bin according to claim 2, wherein a first joint structure is arranged between the first partition plate and the second partition plate.

4. The litter bin according to claim 3, wherein the first joint structure comprises a first embedding block and a first embedding slot used in conjunction with the first embedding block; and the first embedding block is arranged in the first embedding slot when the first housing is connected to the second housing.

5. The litter bin according to claim 4, wherein the first embedding block is formed by protruding from one side, opposite to the second partition plate, of the first partition plate; and the first embedding slot is located on the second partition plate.

6. The litter bin according to claim 4, wherein second guide surfaces are formed on two sides of the first embedding block and two side walls of a notch of the first embedding slot.

7. The litter bin according to claim 2, wherein an inner side wall, close to the receiving slot, of the first partition plate protrudes to form a first reinforcing rib, and an inner side wall, close to the receiving slot, of the second partition plate protrudes to form a second reinforcing rib.

8. The litter bin according to claim 7, wherein both the first reinforcing rib and the second reinforcing rib are arranged in a lengthwise direction of the second opening; one end of the first reinforcing rib is connected to a side wall of the bin body, and the other end protrudes out of the first partition plate and is arranged in the second housing when the first housing is connected to the second housing; the second reinforcing rib and the first reinforcing rib are misaligned; and one end of the second reinforcing rib is connected to the side wall of the bin body, and the other end protrudes out of the second partition plate and is arranged in the second housing when the first housing is connected to the second housing.

9. The litter bin according to claim 1, wherein the integral partition plate comprises a cambered surface section located next to the sifter, and a guide section; a side surface, away from the receiving slot, of the cambered surface section is a cambered surface protruding relative to the side wall of the bin body; and the guide section extends from the cambered surface section to the second opening of the bin body to guide the waste to the second opening when the bin body rotates, wherein two end surfaces of the sifter protrude outwards to form first insertion blocks; first insertion slots are formed in positions, corresponding to the first insertion blocks, on an inner side wall of the bin body; the first insertion blocks are arranged in the first insertion slots; the inner side wall of the bin body protrudes on one side of the notch of the receiving slot to form a first limiting block; and the sifter is located between the first limiting block and the integral partition plate.

10. The litter bin according to claim 9, wherein a second limiting block is formed on a side wall, away from the first limiting block, of the sifter, and the second limiting block is located on one side, away from the receiving slot, of the integral partition plate.

11. The litter bin according to claim 2, wherein a second joint structure is arranged between the first housing and the second housing wherein the second joint structure comprises a second embedding block and a second embedding slot used in conjunction with the second embedding block; and the second embedding block is arranged in the second embedding slot when the first housing is connected to the second housing.

12. The litter bin according to claim 11, wherein the second embedding block is formed by protruding out of one side, opposite to the second housing, of the first housing, and the second embedding slot is located on the second housing, wherein one side, close to the second housing, of the first housing protrudes to form a plurality of first connecting lug seats; one side, close to the first housing, of the second housing protrudes to form a plurality of second connecting lug seats; the first connecting lug seats are connected to the second connecting lug seats through screws; the second connecting lug seats are located on outer sides of the first connecting lug seats and are provided with counter bores in positions corresponding to the screws; and plugs are arranged in the counter bores.

13. The litter bin according to claim 1, wherein a removable basin body provided with a third opening in a top is arranged in the bin body; the inner wall of the bin body protrudes out of a circumferential side of the basin body to form a plurality of clamping blocks configured to limit the basin body; and the first limiting block is a clamping block, wherein a side wall, close to the third opening, of the basin body inwards protrudes to form a cambered guide surface.

14. A pet toilet, comprising a base, a collection basin arranged on the base, and a litter bin as according to claim 1,
wherein the litter bin is rotatably arranged on the base; a first opening that is in communication with the collection basin is formed in the base; the litter bin rotates relative to the base; and when the second opening is opposite to the first opening, the waste falls into the collection basin through the second opening and the first opening in sequence.

15. The pet toilet according to claim 14, wherein the collection basin is detachably arranged at a bottom of the base; and the bottom of the base is further provided with a support leg located on the circumferential side of the collection basin, wherein two sides of a top of the collection basin outwards extend to form second insertion blocks; sliding chutes used in conjunction with the second insertion blocks are formed in the bottom of the base; and the insertion blocks are arranged in the sliding chutes.
